# EUROPÄISCHE PATENTSCHRIFT

(11) **EP 3 411 315 B1**
(45) Veröffentlichungstag und Bekanntmachung des Hinweises auf die Patenterteilung: **05.04.2023**
(21) Anmeldenummer: 17703134.1
(22) Anmeldetag: 03.02.2017
(51) Int. Cl.: B65G 29/00, B65G 47/84

(54) **TRANSPORTSTERN ZUM FÜHREN VON BEHÄLTERN IN EINER BEHÄLTERBEHANDLUNGSANLAGE**
TRANSPORT STAR-WHEEL FOR GUIDING CONTAINERS IN A CONTAINER HANDLING FACILITY
SYSTÈME DE TRANSPORT EN ÉTOILE SERVANT À GUIDER DES RÉCIPIENTS DANS UNE INSTALLATION DE TRAITEMENT DE RÉCIPIENTS

(30) Priorität: 04.02.2016 DE 102016101985
(43) Veröffentlichungstag der Anmeldung: 12.12.2018
(73) Patentinhaber: KHS GmbH, 44143 Dortmund (DE)
(72) Erfinder: SCHOPP, Matthias, 29223 Celle (DE); GARCIA, Alberto, Toluca Estado de México 50245 (MX)
(86) Internationale Anmeldenummer: PCT/EP2017/052340
(87) Internationale Veröffentlichungsnummer: WO 2017/134201

(56) Entgegenhaltungen:
- DE-A1- 1 482 616
- DE-A1-102011 010 954
- DE-A1-102013 105 431
- DE-A1-102013 106 084
- GB-A- 2 075 943

## Beschreibung

Die Erfindung betrifft einen Transportstern zum Führen von Behältern in einer Behälterbehandlungsanlage.

Formatteile, wie bspw. Transportsterne, werden in Behälterbehandlungsanlagen eingesetzt, um die Behälter beim Durchführen durch die Anlage entlang eines Transportweges zu halten und zu führen. Dabei werden Transportsterne, bspw. im Bereich von Flüssigkeitsfüllern, Etikettier- oder Verschließermaschinen, verwendet.

Die Formatteile sind üblicherweise auf eine Behältergattung oder begrenzte Behältergrößen abgestimmt, so dass bei einem Behälterwechsel auch die Formatteile ausgewechselt werden müssen. Um den aufwendigen Wechsel von Transportsternen zu vermeiden, sind Transportsterne bekannt, die in ihrer Größe einstellbare Sterntaschen aufweisen, so dass ein Transportstern Behälter mit unterschiedlichem Durchmesser halten und durch die Behälteranlage führen kann.

Bei Transportsternen kann man zwei verschiedene Gattungen unterscheiden. Zum einen Transportsterne mit Behältergreifern bzw. Behälterklammern zum lagegenauen Fixieren des Behälters am Transportstern und zum anderen Transportsterne mit Sterntaschen, in die die Behälter einlaufen und in denen die Behälter bei der Drehbewegung des Transportsterns geführt werden. Transportsterne mit Sterntaschen weisen üblicherweise eine Außenführung auf, mit der die Behälter in Kontakt sind und an der die Behälter von dem sich rotierenden Transportstern entlang geschoben werden.

Wie bei dem aus der DE 10 050 084 A1 bekannten verstellbaren Transportstern mit Sterntaschen erfolgt die Größenveränderung der Sterntaschen häufig mittels einer Rotationsbewegung einzelner Sternräder. Zudem sind Transportsterne bekannt, bei denen mittels der Rotationsbewegung der Sternräder die Kontaktbereiche der Sterntaschen radial bewegt werden.

Ein weiterer Transportstern mit in ihrer Größe einstellbaren Transporttaschen ist zudem aus der DE 10 2013 105 431 A1 bekannt, bei dem ein Anlageabschnitt der Behältertasche über ein Gelenkarmsystem in Radial- und Vertikalrichtung verstellbar ist. Alternativ zum Gelenkarmsystem kann der Transportstern auch eine flexible Membran zur Anlage der Behälter aufweisen. Auch ist aus der DE 3 040 096 A1 ein Transportstern mit Behältertaschen bekannt, die in Radialrichtung verstellbare Taschenschalen aufweisen, mittels derer ein weich elastisches Material an die Behälter angelegt wird.

Die bekannten Transportsterne mit Sterntaschen weisen eine Verstellmechanik auf, um ein gleichzeitiges und gleichmäßiges Verstellen der Sterntaschen in ihrer Größe zu bewirken. Die Verstellmechaniken sind konstruktiv extrem aufwendig, teuer und gegenüber Beschädigungen empfindlich. Zudem erschwert die aufwendige Mechanik die Reinigbarkeit der Transportsterne erheblich, so dass bspw. hohe hygienische Anforderungen beim Transport von Behältern für Lebensmittel nur schwer zu erreichen sind.

Neben den unterschiedlichen Durchmesser der Behälter ergibt sich insbesondere auch bei unterschiedlichen Behälterhöhen ein Problem, da der optimale Anlagepunkt der Sterntasche am Behälter auf unterschiedlichen Höhen ist. Zum Verstellen der Arbeitshöhe des Transportsterns in der Behandlungsanlage werden üblicherweise die Transportsterne und gegebenenfalls die Außenführung ausgewechselt. Alternativ, jedoch auch sehr aufwendig, können die Transportsterne als Ganzes in der Behälterbehandlungsanlage in ihrer Arbeitshöhe verfahrbar angeordnet sein. So sind bspw. aus der DE 10 2013 106 084 A1 und der DE 10 2012 106 263 A1 vertikale, verstellbare Behälterstützvorrichtungen bekannt.

Der Erfindung liegt somit die Aufgabe zugrunde, einen verstellbaren Transportstern zum Führen von Behältern mit unterschiedlichen Abmessungen bereitzustellen, der kostengünstig, leicht verstellbar und einfach zu reinigen ist.

Die Erfindung löst die Aufgabe durch einen Transportstern mit den Merkmalen des Anspruchs 1. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung.

Der erfinderische Transportstern zum Führen von Behältern in einer Behälterbehandlungsanlage umfasst ein Sternrad mit einer Mehrzahl an Sterntaschen zur Anlage von jeweils einem der Behälter und einer Verstellvorrichtung mit Lineareinheiten zum Bewegen der Sterntaschen, einer die Lineareinheiten und die Sterntaschen verbindenden Kopplungseinheit und einer Führungsvorrichtung zum Führen der Sterntaschen in radialer und vertikaler Richtung.

Der erfinderische Transportstern ermöglicht somit den Transport von verschiedenen Behältern mit unterschiedlichen Durchmessern und mit vom Behälterboden ausgehend unterschiedlich hohen optimalen Anlagepunkten der Sterntasche am Behälter.

Unter gattungsgemäßen Transportsternen werden verstellbare Transportsterne verstanden, die Sterntaschen zur Aufnahme von Behältern aufweisen. D.h., die Transportsterne weisen am Außenumfang eines Sternrades Bauteile auf, die Sterntaschen ausbilden und an die die Behälter angelegt werden können. Die gattungsgemäßen Transportsterne weisen keine Behälterklammern/Behältergreifer auf, mit denen ein festes Umschließen der Behälter erfolgt. Die Sterntaschen sind somit als nicht greifende Behälteraufnahmen ausgebildet. Auch weist der Transportstern keine koaxial verstellbaren Sternräder auf um die Sterntaschen radial und/oder vertikal zu bewegen.

Die gattungsgemäßen Transportsterne können mit einer Außenführung an der Behälterbehandlungsanlage zusammenwirken, so dass die Behälter zwischen der Außenführung und den Anlageflächen in der Sterntasche gehalten und an der Außenführung entlang geschoben werden.

Die Transportsterne sind insbesondere für Behälter, wie bspw. Flaschen oder Dosen, ausgebildet. Dabei können die Behälter für Flüssigkeiten, bspw. Getränke, vorgesehen sein. Die Transportsterne werden insbesondere in Behälterbehandlungsanlagen mit entsprechenden Behälterfüllstationen, Etikettierstationen und/oder auch Verschließstationen eingesetzt. Auch können entsprechende Wartungs- und Inspektionsvorrichtungen in der Behälterbehandlungsanlage vorhanden sein, durch die die Behälter mithilfe der Transportsterne geführt werden. Dabei werden die Transportsterne bspw. im Bereich der Transportwege zwischen den einzelnen Stationen der Behälterbehandlungsanlage verwendet.

Unter einem Sternrad wird ein Bauteil des Transportsterns verstanden, das an seinem Außenumfang die Sterntaschen zum Anlegen der Behälter aufweist, wobei jeweils eine Sterntasche zur Aufnahme eines Behälters vorgesehen und ausgebildet ist. Die Sterntaschen können bspw. als Ausbuchtungen im Außenbereich des Sternrades oder auch als am Sternrad (im Bereich des Außenumfanges) angeordnete Bauteile, die eine Sterntasche ausbilden, ausgebildet sein. So können die Sterntaschen v-förmig (gabelartig) ausgebildet sein und bspw. winkelig zueinander angeordnete Sterntaschenarme umfassen. Auch können die Sterntaschen bogenförmig, bspw. u-förmig oder halb-ovalförmig ausgebildet sein.

Ein Sternrad weist eine Mehrzahl von einzelnen Sterntaschen auf, die nebeneinander im Bereich des Außenumfangs des Sternrades angeordnet sind. Die Anzahl der Sterntaschen ist abhängig von dem Sternraddurchmesser- bzw. dem Behälterdurchmesser. Unter einer Mehrzahl wird im Sinne der Erfindung mindestens eine Anzahl von zwei bspw. Sterntaschen oder Lineareinheiten verstanden.

Die Sternräder weisen wie bereits erwähnt keine Greif- oder Klammerelemente zum Ergreifen oder Umfassen eines Behälters auf. D.h., der Behälter kommt mit der Sterntasche in Kontakt, liegt an dieser an und wird ggf. bei einem entsprechenden Außendruck an diese gepresst. Die Sterntaschenflanken bzw. -arme, d.h. die die Kontaktflächen umfassenden Bauteile der Sterntasche, können nicht wie bei einem Behältergreifer (Behälterklammer) im Betrieb des Transportsterns aufeinander zu- bzw. voneinander wegbewegt werden. Die Sterntaschenflanken sind insbesondere starr (unbeweglich) zueinander angeordnet. Mittels der Sterntaschen erfolgt somit kein aktives Erfassen, sondern es wird allenfalls ein leichter Pressdruck der Behälter auf die Kontaktflächen an der Sterntasche erzeugt.

Unter einer Verstellvorrichtung wird vorliegend eine Vorrichtung verstanden, mittels der die Sterntaschen zwischen mindestens zwei radialen Positionen und zwischen mindestens zwei vertikalen Positionen hin- und herbewegt werden können. Die Radialrichtung bezieht sich dabei auf die Richtung zwischen der Drehachse und der Außenseite des Sternrads, während sich die Vertikalbewegung auf die Längsachsenrichtung der Drehachse des Sternrads bezieht.

Die Verstellvorrichtung umfasst eine Mehrzahl von Lineareinheiten. Als besonders günstig für die Positioniergenauigkeit der Sterntaschen beträgt dabei das Verhältnis zwischen der Anzahl an Sterntaschen und der Anzahl an Lineareinheiten 1:1 oder 2:1.

Unter der ebenfalls von der Verstellvorrichtung umfassten Kopplungseinheit wird eine Verbindung zwischen mindestens einer Lineareinheit und einer Sterntasche verstanden, mittels der eine Bewegung der Lineareinheit auf die Sterntasche übertragen wird. Die radiale und vertikale Bewegungsrichtung der Sterntasche wird über die Führungseinheit gelenkt._Dementsprechend wird unter der Führungseinheit eine die Bewegung der Sterntaschen in radiale und vertikale Richtung lenkende Vorrichtung verstanden.

Die Kopplungseinheit kann zwischen einer einzelnen Lineareinheit und einer einzelnen Sterntasche oder alternativ zwischen einer Lineareinheit und mehreren Sterntaschen, bspw. zwei Sterntaschen, ausgebildet sein. Auch kann die Kopplungseinheit mehrere Teilkopplungen aufweisen, die jeweils bspw. eine Lineareinheit mit einer oder mehreren Sterntaschen verbindet. Vorzugsweise kann die Kopplungseinheit auch alle Lineareinheiten mit allen Sterntaschen verbinden, wodurch eine besonders gute und gleichmäßige Verteilung der von den Lineareinheiten auf die Sterntaschen wirkenden Kraft und somit eine besonders präzise Bewegung der Sterntaschen erfolgt. Auch wird bei einem Gegendruck eines Behälters an einer einzelnen Sterntasche die von dem Behälter auf die Sterntasche übertragene Kraft mittels der Kopplungseinheit auf alle verbundenen Lineareinheiten verteilt, wodurch auch im Betrieb des Transportsterns die Position der Sterntaschen besonders exakt erhalten bleibt.

Die Kopplungseinheit kann in einfachster Ausführung eine Schraub- oder Steckverbindung sein, die bspw. ein zweites, radial nach außen gerichtetes Ende der Lineareinheit mit der Sterntasche verbindet. Zum Koppeln von einer Lineareinheit mit mehreren, bspw. zwei Sterntaschen, kann die Kopplungseinheit Kopplungsarme aufweisen, die mit einem ersten Ende an einem zweiten Ende der Lineareinheit und mit einem zweiten Ende mit der Sterntasche verbunden sind.

Die radiale und vertikale Verstellung der Sterntaschen erfolgt bei einem Behälterwechsel. Die Sterntaschen werden somit im nicht rotierenden Zustand der Sternräder in Radial- und Vertikalrichtung mittels der Verstellvorrichtung in ihre vorgegebene Position bewegt. Dabei erfolgt die Bewegung der Sterntaschen, bspw. zumindest weitestgehend gleichzeitig und um das gleiche Bewegungsmaß. D.h., die Sterntaschen eines Sternrades können synchron mittels der Verstellvorrichtung in eine gleiche Endposition bewegt werden.

Die Lineareinheiten und die Führungseinheit ermöglichen dabei insbesondere auch eine stufenlose Verstellbarkeit, so dass die Transportsterne besonders flexibel für eine große Anzahl unterschiedlicher Behältergrößen, insbesondere Behälterhöhen und Behälterdurchmesser, verwendbar sind. D.h., die Verstellvorrichtung ist zudem bevorzugt derart ausgebildet, dass die Sterntasche neben den Endpositionen als Betriebspositionen auch jede mögliche Position zwischen den Endpositionen als Betriebsposition einnehmen kann.

Um im Betrieb des Transportsternes eine ungewollte Bewegung der Sterntaschen aus einer vorgegebenen Betriebsposition zu verhindern, weist die Verstellvorrichtung vorzugsweise zudem eine Fixiereinheit auf, die die Sterntasche in der eingestellten Position fixiert. Die Fixiereinheit kann bspw. als Klemm- oder Rastvorrichtung ausgebildet sein. Auch kann bspw. eine Führungskurve entsprechende Rastelemente umfassen, in die Mitnehmer einrasten.

Die von der Verstellvorrichtung umfassten Lineareinheiten sind in Radialrichtung angeordnet. D.h., die Lineareinheiten sind mit ihrer Längsachse in Radialrichtung ausgerichtet, so dass auch die Wirkrichtung der Lineareinheiten radial ist. Unter Lineareinheiten können bspw. elektrische Linearmotoren, elektrisch angetriebene Lineareinheiten (bspw. Spindelantriebe), mechanisch verstellbare Gestänge oder Kolben-Zylinder-Einheiten verstanden werden. Kolben-Zylinder-Einheiten können auch zum pneumatischen Betrieb vorgesehen sein oder als mechanisch verstellbare Kolben-Zylinder-Einheiten ausgebildet sein, sind jedoch besonders bevorzugt zum Betrieb mit Hydraulikflüssigkeit ausgebildet, um eine besonders hohe Einstellgenauigkeit zu erreichen. Dabei ist das für die hydraulischen Lineareinheiten notwendige flüssige Fluid (Hydraulikflüssigkeit) vorzugsweise steriles Wasser, eine wässrige Lösung, Speiserohöl oder eine hochviskose Flüssigkeit. Insbesondere kann das flüssige Fluid als für die Lebensmittelherstellung geeignetes flüssiges Fluid ausgebildet sein.

Für eine besonders einfache konstruktive Ausgestaltung ist nach einer Weiterbildung der Erfindung vorgesehen, dass die Lineareinheit mit einem ersten Ende schwenkbar gelagert ist. Die Lagerung erfolgt vorteilhafterweise an dem der Drehachse des Transportsterns zugewandten ersten Ende der Lineareinheit. Die Lagerung kann bspw. über eine Lagerachse oder ein Drehgelenk erfolgen. Das dem ersten Ende gegenüberliegende zweite Ende der Lineareinheit kann bspw. über die Kopplungseinheit mit der Sterntasche verbunden sein.

Während die Lineareinheit eine Bewegungskraft über die Kopplungseinheit auf die Sterntasche überträgt, wird, wie bereits erwähnt, der Weg der Bewegung in die radiale und vertikale Richtung von der Führungseinheit gelenkt.

Hierfür weist die Führungseinheit erfindungsgemäß eine Führungskurve auf, in der ein mit der Sterntasche verbundener Mitnehmer angeordnet ist. Beim Übertragen der Bewegungskraft von der Lineareinheit auf die Sterntasche bewegt sich diese über den Mitnehmer entlang der Führungskurve in vertikale und radiale Richtung. Die Bewegung der Sterntasche in Radial- und Vertikalrichtung erfolgt somit als kontinuierliche Bewegung der Sterntasche und nicht in Form von zusammengesetzten Teilbewegungen unterschiedlicher Baukörper, wie bspw. einer Vertikalbewegung des Transportsterns und einer Radialbewegung der Sterntaschen.

Die Führungskurve ist vorzugsweise in einem Führungselement als Schlitz oder Nut ausgebildet, in dem bspw. der als Bolzen ausgebildete Mitnehmer geführt wird. Der Mitnehmer kann mit der Sterntasche, bzw. an einem mit der Sterntasche verbundenen Führungskörper angeordnet sein.

Der Führungskörper und das Führungselement sind insbesondere parallel zueinander angeordnet. Auch können der Führungskörper und/oder das Führungselement parallel zur Lineareinheit ausgerichtet sein. Zur besonders exakten Führung und Positionierung der Sterntasche in einer Betriebsposition (in der die Behälter transportiert werden) weist die Sterntasche vorzugsweise zwei beabstandet zueinander angeordnete Führungskörper auf, die jeweils über einen Mitnehmer in einer Führungskurve eines Führungselementes gelagert sind. Dementsprechend können für jede Sterntasche auch zwei Führungselemente mit Führungskurve angeordnet sein.

Eine Verstellvorrichtung für eine einzelne Sterntasche kann somit einen spiegelbildlichen strukturellen Aufbau aufweisen. So kann eine zentral in Radialrichtung angeordnete Lineareinheit zwischen zwei zur Sterntasche gehörenden Führungskörpern angeordnet sein, die wiederum zwischen zwei Führungselementen und parallel zu diesen ausgerichtet, angeordnet sind. Der Führungskörper kann mit einem in Radialrichtung nach außen zeigenden ersten Ende mit der Sterntasche verbunden sein. Der Führungskörper ist bspw. plattenförmig ausgebildet, wobei die Plattenebene vertikal ausgerichtet ist.

Bei einer Kopplungseinheit, die sämtliche Lineareinheiten mit sämtlichen Sterntaschen koppelt und/oder bei einem Verhältnis der Lineareinheiten zu Sterntaschen von 1:2 oder größer, kann die Kopplungseinheit Kopplungsarme aufweisen, die zwischen der Lineareinheit und einer im Bereich der Sterntasche angeordneten Führungsvorrichtung angeordnet sind. Um hierbei sowohl eine vertikale als auch eine radiale Bewegung der Sterntaschen zu ermöglichen, kann die Führungsvorrichtung ein Führungselement mit Führungsschlitz umfassen, in dem ein mit den Kopplungsarmen verbundener Mitnehmer geführt wird.

Um die Bewegungsmöglichkeit der Sterntaschen zu erweitern, bzw. die Bauform des Transportsterns kompakter auszugestalten, ist nach einer Weiterbildung der Erfindung vorgesehen, dass die Führungskurve schwenkbar gelagert ist. Dabei kann das die Führungskurve umfassende Führungselement beispielsweise mit einem in Richtung der Drehachse ausgerichteten ersten Ende um eine Achse drehbar gelagert sein oder ein Drehgelenk umfassen. Die Ausrichtung der Lagerung erfolgt derart, dass die Führungskurve in vertikaler Richtung schwenkbar ist. Zum Verstellen und/oder Fixieren der Führungskurve in unterschiedlichen vertikalen Positionen kann beispielsweise eine Stellschraube angeordnet sein.

Die Bewegungsrichtung der Sterntaschen zwischen den vertikalen und den radialen Endpositionen ist abhängig von der Führungseinheit, bspw. der Form der Führungskurve. So erfolgt die Bewegung einer einzelnen Sterntasche nach einer Weiterbildung der Erfindung gleichzeitig, nacheinander und/oder abwechselnd in radiale und vertikale Richtung. D.h., die Bewegungsbahn der Sterntasche kann gleichzeitig eine vertikale und eine radiale Komponente aufweisen, bspw. bei einer zur Drehachse des Transportsterns schräg angeordneten Führungskurve. Die Bewegung der Sterntasche kann vollständig oder abschnittsweise linear, bogenförmig und/oder stufenförmig sein.

Dementsprechend kann bspw. eine Führungskurve vollständig oder abschnittsweise linear, bogenförmig und/oder stufenförmig ausgebildet sein, wobei jede Kombination hieraus möglich ist. Somit ergibt sich, dass die radiale und vertikale Bewegung der Sterntasche gleichzeitig, separat voneinander, d.h. nacheinander ggf. auch abwechselnd nacheinander erfolgen. Die Form der Bewegung der Sterntasche und somit auch bspw. die Form der Führungskurve ist vorzugsweise an die zu befördernden unterschiedlichen Behälterabmessungen angepasst.

Nach einer Weiterbildung der Erfindung weist jede Sterntasche mindestens zwei im Betrieb des Transportsterns starr zueinander angeordnete Sterntaschenarme zum Kontakt (Anlegen) mit einem der Behälter auf. Die Sterntaschenarme sind derart ausgebildet, dass sie im Betrieb des Transportsterns, d.h., beim Transport der Behälter durch den Transportstern, keine Klammer- oder Greifbewegung zum Erfassen eines der Behälter durchführen. Jeder Sterntaschenarm kann einen Anlagebereich zum Anlegen eines der Behälter aufweisen.

Die Lineareinheiten können wie bereits erwähnt als Kolben-Zylinder-Einheiten ausgebildet sein, wobei der Kolben in Linearrichtung bewegbar in dem Zylinder gelagert ist. Nach einer Weiterbildung der Erfindung weist die Verstellvorrichtung, zum Antrieb der Lineareinheiten, eine mit den Lineareinheiten gekoppelte Antriebseinheit auf. Die Antriebseinheit kann bspw. als Zahnradantrieb, der auf ein Hydraulikflüssigkeitsreservoir wirkt, ausgebildet sein. Besonders bevorzugt ist die Antriebseinheit jedoch als Servomotor (bspw. Servospindel) oder Arbeitszylinder, insbesondere als elektrischer Linearmotor oder hydraulisch angetriebene Lineareinheit, bspw. als Kolbenzylindereinheit mit Pumpe, ausgebildet. Über die Ausbildung der Antriebseinheit als Servomotor bzw. als Arbeitszylinder ist eine besonders exakte Ansteuerung der Lineareinheiten und somit eine besonders exakte und leichte radiale und vertikale Verstellung der Sterntaschen möglich.

Um die Synchronität der Verstellbewegung der Sterntasche zu verbessern, d.h. eine besonders exakt ablaufende gleichzeitige und gleichmäßige Bewegung der Sterntaschen zu erreichen, sind nach einer Weiterbildung der Erfindung insbesondere die hydraulischen oder pneumatischen Lineareinheiten in Reihe nacheinander gekoppelt. D.h., die Lineareinheiten sind derart miteinander verbunden, dass ausgehend von der Antriebseinheit bspw. die Hydraulikflüssigkeit/das Pneumatikgas von einer Lineareinheit in die nächste Lineareinheit strömt. Die Bewegung der Lineareinheiten bzw. der Sterntaschen erfolgt hierdurch synchron, abgesehen von der geringen Verzögerung aufgrund der Fließbewegung der Hydraulikflüssigkeit/des Pneumatikgases.

Nach einer Weiterbildung der Erfindung weist die Verstellvorrichtung bei einer hydraulischen oder pneumatischen Lineareinheit eine mit der Antriebseinheit und den Lineareinheiten gekoppelte Verteilereinheit auf. Die Verteilereinheit steuert die Lineareinheiten an. Dabei kann die Verteilereinheit vorzugsweise derart ausgebildet sein, dass sie jede Lineareinheit oder zumindest jeweils Gruppen von Lineareinheiten bzw. Gruppen von in Reihe miteinander gekoppelten Lineareinheiten gleichzeitig ansteuert und die Hydraulikflüssigkeit/das Pneumatikgas in die Lineareinheiten einbringt. Die Verteilereinheit bewirkt eine besonders präzise Bewegung sämtlicher Lineareinheiten in die gleiche Betriebsposition.

Vorzugsweise sind hierbei die Lineareinheiten oder Gruppen von Lineareinheiten parallel geschaltet. Die Verteilereinheit kann als hydromechanische Gleichlaufeinrichtung ausgebildet sein, die mittels einer gesteuerten Verteilung eines hydraulischen Fluids/ Pneumatikgases einen Gleichlauf der Lineareinheiten bzw. Lineareinheitengruppen erzeugt. Die Gleichlaufeinrichtung wird wiederum von der Antriebseinheit angesteuert.

Die Antriebseinheit und ggf. die Gleichlaufeinrichtung können am Sternrad bzw. am rotierenden Teil des Transportsterns, angeordnet sein. Um die Reinigbarkeit zu verbessern und den konstruktiven Aufbau des Sternrades zu vereinfachen, ist nach einer Weiterbildung der Erfindung vorgesehen, dass die Antriebseinheit an einem im rotierenden Betrieb des Sternrades nicht rotierenden Baukörper der Behälterbehandlungsanlage, insbesondere einer Sternradaufnahme, angeordnet ist.

Zur einfachen Übertragung der Kräfte von der Antriebseinheit auf die Verteilereinheit bzw. direkt auf die Lineareinheiten, ist nach einer Weiterbildung der Erfindung eine Kopplung vorgesehen, die insbesondere mechanisch ausgebildet ist und zur Übertragung der Antriebskraft von der Antriebseinheit auf die Verteilereinheit bzw. auf die Lineareinheiten ausgebildet ist.

Nach einer Weiterbildung der Erfindung ist zudem ein Sensor zur Ermittlung der Position der Sterntasche angeordnet. Der Sensor kann als Wegsensor ausgebildet sein, der die Bewegung der Sterntasche bzw. des beweglichen Bauteils der Lineareinheit überwacht und aufnimmt. Der Sensor kann jedoch auch als Positionssensor ausgebildet sein, der ausschließlich die Endlage (bspw. die Betriebsposition) der Sterntasche erfasst. Der Sensor, insbesondere in Kombination mit einer Steuereinheit für die Verstellvorrichtung, ermöglicht eine besonders präzise Positionierung der Sterntaschen in einer vorgegebenen Position bzw. die Überwachung der Position der Sterntaschen im rotierenden Betrieb des Sternrades.

Nach einer Weiterbildung der Erfindung weist der Transportstern ein zweites Sternrad auf, das oberhalb oder unterhalb von dem ersten Sternrad angeordnet ist. Das zweite Sternrad ist parallel zum ersten Sternrad angeordnet und dreht um die gleiche vertikale Drehachse. Die Sternräder sind derart zueinander angeordnet, dass jeweils eine Sterntasche des oberen Sternrades direkt oberhalb einer Sterntasche des unteren Sternrades angeordnet ist, so dass jeweils eine Sterntasche des oberen Sternrades und eine Sterntasche des unteren Sternrades gemeinsam an einen Behälter angreifen.

Bei einer Ausbildung des Transportsterns mit zwei übereinander angeordneten Sternrädern weist der Transportstern vorzugsweise separate Antriebsvorrichtungen auf, so dass die Lineareinheiten des oberen Sternrades separat von den Lineareinheiten des unteren Sternrades bewegt werden können.

Das zweite Sternrad kann entsprechend dem ersten Sternrad mit in vertikaler und radialer Richtung verstellbaren Sterntaschen ausgebildet sein. Insbesondere bei der Ausbildung des oberen Sternrades als Sternrad mit in radialer und vertikaler Richtung verstellbaren Sterntaschen kann das untere Sternrad als Sternrad mit ausschließlich radial verstellbaren oder gegebenenfalls nicht verstellbaren Sterntaschen ausgebildet sein, da oftmals eine radiale und vertikale Anpassung der oberen Sterntaschen ausreicht, um einen sicheren Halt des Behälters zu gewährleisten.

Eine weitere Ausführungsform sieht vor, dass die Verstellvorrichtung eine Zentralverstellung umfasst, die bspw. analog eines Öffnungsmechanismus für einen Regenschirm oder eine Wäschespinne ausgebildet ist. Hierfür kann die Zentralverstellung beispielsweise zumindest abschnittsweise vertikal bewegbar und/oder zentral, bspw. im Bereich der Drehachse des Transportsterns, angeordnet sein.

Die Zentralverstellung kann mit der Antriebseinheit und den Lineareinheiten verbunden sein, so dass sie eine von der Antriebseinheit kommende Bewegungskraft auf die Lineareinheiten überträgt, wodurch die Sterntaschen bewegt werden. Die Bewegungsrichtung der Sterntaschen kann weiterhin von der Führungseinrichtung vorgegeben werden.

Die Zentralverstellung kann als mechanische Zentralverstellung, bspw. als mechanisch verstellbares Gestänge, Führungsvorrichtung, Kulissenführung und/oder mechanisch verstellbare Kolben-Zylinder-Einheit ausgebildet sein.

Um die Bewegung der Zentralverstellung besonders einfach auf die Sterntaschen zu übertragen, können die Lineareinheiten ebenfalls als Gestänge, Führungsvorrichtung und/oder Kulissenführung oder als mechanische (ohne hydraulisches oder pneumatischen Antriebsmittel) Kolben-Zylinder-Einheiten ausgebildet sein.

Im Weiteren wird die Erfindung anhand mehrerer Ausführungsbeispiele näher beschrieben. Es zeigt:
- Fig. 1: schematisch in einem Querschnitt eine erste Ausführungsform des erfindungsgemäßen Transportsterns;
- Fig. 2: schematisch in einer perspektivischen Darstellung das Sternrad aus Fig. 1;
- Fig. 3: schematisch in einer perspektivischen Darstellung eine Unterseite des Sternrads aus Fig. 2 mit Führungseinheit zum radialen und vertikalen Bewegen der Sterntaschen;
- Fig. 4: schematisch in einer perspektivischen Darstellung einen Ausschnitt aus einem Transportstern mit zwei Sternrädern;
- Fig. 5: schematisch in einer perspektivischen Darstellung die Unterseite des Transportsterns aus Fig. 4;
- Fig. 6: schematisch in einer Ansicht einen Ausschnitt einer weiteren Ausführungsform eines Transportsterns mit einer alternativen Kopplungseinheit,
- Fig. 7: schematisch in einer Ansicht eine weitere Ausführungsform eines Sternrads mit einer alternativen Ausgestaltung der Kopplungseinheit und
- Fig. 8: schematisch in einer vertikalen Schnittzeichnung einen Transportstern mit zentralem, mechanischem Antrieb für die Sterntaschen.

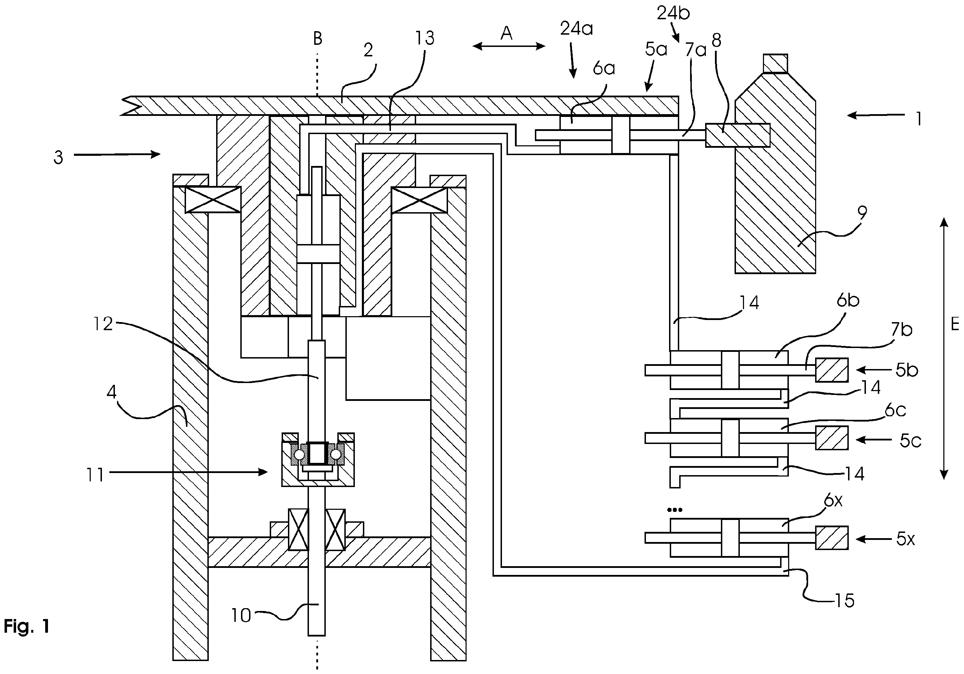

Fig. 1 zeigt schematisch in einem Querschnitt einen Ausschnitt eines erfindungsgemäßen Transportsterns 1. Der Transportstern 1 weist ein Sternrad 2 auf, das über eine Drehlagerung 3 an einer Sternradaufnahme 4 drehbar gelagert ist. Die Sternradaufnahme 4 ist Teil einer Behälterbehandlungsanlage (hier nicht dargestellt).

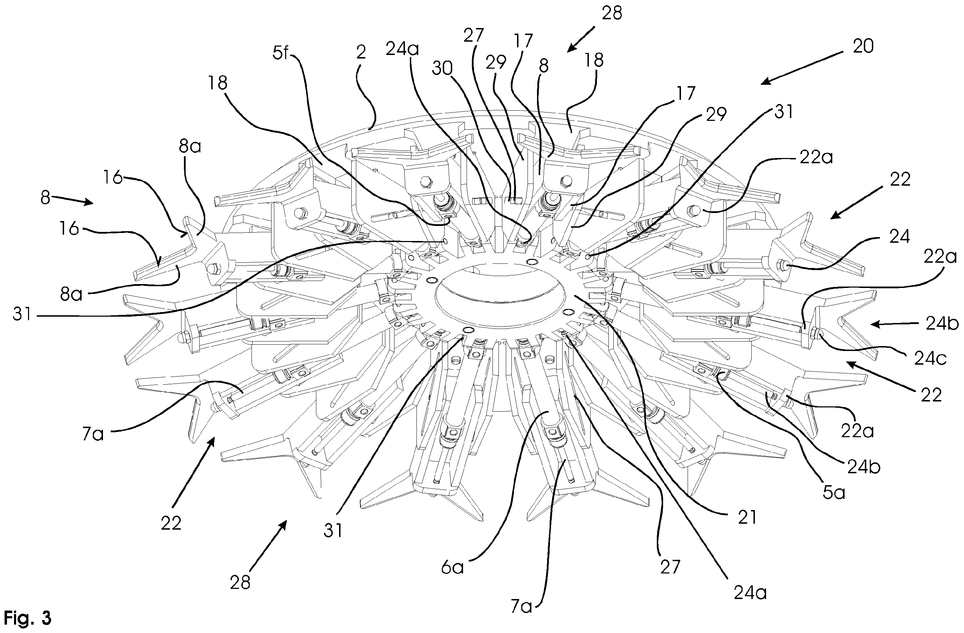

Am Sternrad 2 sind eine Mehrzahl von sich in Radialrichtung A (durch einen Pfeil dargestellt) erstreckender Lineareinheiten 5a-5x nebeneinander angeordnet. Die Lineareinheiten 5a-5x sind als doppelwirkende hydraulische Arbeitszylinder mit einem Zylinder 6a-6x und einem im Zylinder bewegbaren Kolben 7a-7x ausgebildet. An einem zur Drehachse B des Transportsterns 1 zeigendem ersten Ende 24a sind die Lineareinheiten 5a-5x schwenkbar um eine Achse 31 gelagert (siehe Figur 3). An einem dem ersten Ende 24a gegenüberliegenden zweiten Ende 24b (freie äußere Ende) ist eine Sterntasche 8 zum Anlegen eines Behälters 9 angeordnet. Weiter ist eine hier nicht dargestellte Führungseinheit 28 angeordnet, die die Sterntasche 8 bei einer durch die Lineareinheit 5a-5x erzeugten Bewegung in eine vertikale Richtung E (durch einen Pfeil dargestellt) und in Radialrichtung A lenkt.

Zum Erzeugen der Bewegung der Lineareinheiten 5a-5x ist eine Antriebseinheit 10 über eine mechanische Kopplung 11 mit einer hier als Hydraulikzylinder ausgebildeten Verteilereinheit 12 verbunden. Von der Verteilereinheit 12 ausgehend führt eine Hydraulikflüssigkeitsleitung 13 in den Zylinder 6a einer ersten Lineareinheit 5a. Die Lineareinheiten 5a-5x sind in Reihe geschaltet. D.h., das von der Verteilereinheit 12 kommende hydraulische Fluid (hier nicht dargestellt) fließt in den Zylinder 6a der ersten Lineareinheit 5a ein, wodurch der Kolben 7a im Zylinder 6a radial nach außen und vertikal nach unten bewegt wird. Dabei wird das im Zylinder 7a vorhandene flüssige Fluid über eine hydraulische Verbindungsflüssigkeitsleitung 14 in einen Zylinder 6b einer zweiten Lineareinheit 5b eingetragen. Hierdurch wird der Kolben 7b der zweiten Lineareinheit 5b entsprechend radial nach außen und vertikal nach unten bewegt und das im Zylinder 6b der zweiten Lineareinheit 5b vorhandene flüssige Fluid in den Zylinder 6c der nächsten, dritten Lineareinheit 5c weiter geleitet.

Aufgrund der Anordnung der einzelnen Lineareinheiten 5a-5x in Reihe werden sämtliche Kolben 7a-7x weitestgehend gleichzeitig und um den gleichen Weg, d.h. synchron, bewegt. Ausgehend von der letzten Lineareinheit 5x führt eine hydraulische Flüssigkeitsrückleitung 15 das hydraulische Fluid zurück in die Verteilereinheit 12. Aufgrund der Führungseinheit 28 erfolgt die Auslenkung der Sterntaschen 8 sowohl in Radialrichtung A als auch in Vertikalrichtung E.

Im Betrieb des Sternrads 2, d.h. beim Durchführen einer Drehbewegung um seine Drehachse B, ist die mechanische Kopplung 11 getrennt, so dass sich die Verteilereinheit 12 mit dem an der Verteilereinheit 12 befestigten Kopplungsteil der mechanischen Kopplung 11 im Betrieb des Transportsterns 1 mitdreht, während die Antriebseinheit 10 mit dem zur Antriebseinheit 10 gehörenden Antriebsteil der mechanischen Kopplungseinheit 11 die Drehbewegung des Sternrades 2 nicht mit durchführt.

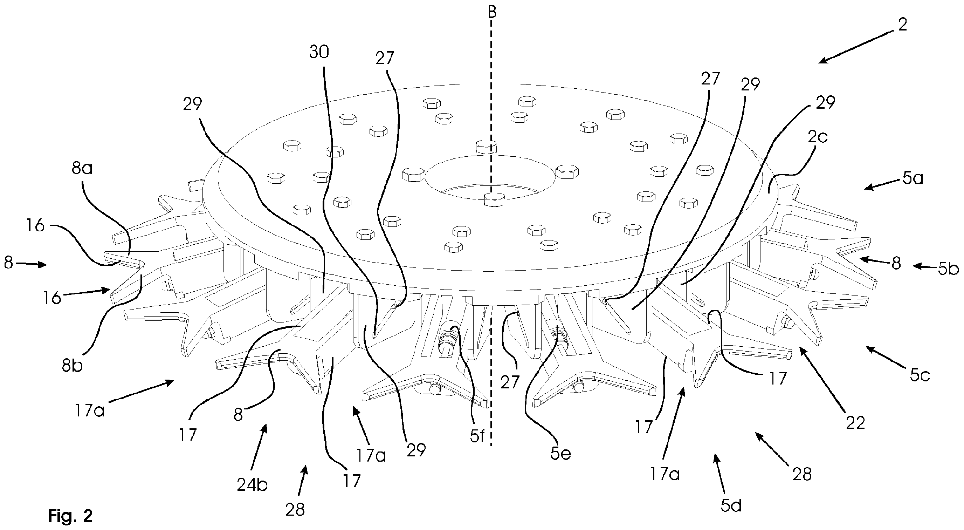

Fig. 2 zeigt in einer perspektivischen Ansicht eine Ausführungsform des in Fig. 1 dargestellten und oben beschriebenen Sternrades 2. In Umlaufrichtung nebeneinander sind eine Mehrzahl von Sterntaschen 8 - hier sichtbar 11 Stück - angeordnet. Jeder Sterntasche 8 ist über eine Kopplungseinheit 22 mit einer in Radialrichtung A angeordneten hydraulischen Lineareinheit 5a-5x verbunden. Die Lineareinheiten 5a-5x sind in Reihe hintereinander gekoppelt.

An jeder Sterntasche 8 sind zwei parallel zur Lineareinheit 8 ausgerichtete Führungskörper 17 der Führungseinheit 28 derart angeordnet, dass jede Lineareinheit 5a-5x zwischen zwei Führungskörpern 17 positioniert ist. Die Führungskörper 17 sind plattenförmig ausgebildet, senkrecht zum Sternrad 2 ausgerichtet und mit ihrem zweiten (äußeren) Ende 17a mit der Sterntasche 8 verbunden.

Weiter sind jeder Sterntasche 8 zwei Führungselemente 29 der Führungseinheit 28 zugeordnet, die jeweils außenseitig an den Führungskörpern 17 angeordnet und mit dem Sternrad 2 verbunden sind. Bei der Bewegung der Sterntaschen 8 in vertikale und radiale Richtung gleiten die Führungskörper 17 an den Führungselementen 29 entlang. Alternativ können die Führungselemente 29 auch, beispielsweise im Bereich des zur Drehachse B gerichteten Endes, schwenkbar gelagert sein. Hierfür kann eine Stellschraube (hier nicht dargestellt) zum Einstellen (und bspw. Fixieren) eines Schwenkwinkels zwischen den Führungselementen 29 und dem Sternrad 2 angeordnet sein. Die Stellschraube kann durch das Sternrad 2 hindurchragen und bspw. im Bereich des nach außen zeigenden Endes der Führungselemente 29 mit den Führungselementen 29 verbunden sein.

In jedem Führungselement 29 ist eine als Schlitz ausgebildete Führungskurve 30 angeordnet, in der ein als Bolzen ausgebildeter mit dem Führungskörper 17 verbundener Mitnehmer 27 geführt wird. Die Führungskurve 30 ist linear ausgebildet und schräg zur Drehachse B angeordnet. Alternativ oder als Kombination kann die Führungskurve 30 auch eine bogenförmige Form und/oder eine stufenförmige Form mit linearen und/oder bogenförmigen Abschnitten haben.

Fig. 3 zeigt in einer perspektivischen Ansicht eine Unterseite des Sternrades 2 aus Fig. 2. Deutlich sichtbar ist die Verstellvorrichtung 20 mit den senkrecht zum Sternrad 2 ausgerichteten Führungselementen 29 und den zwischen den Führungselementen 29 angeordneten, mit den Sterntaschen 8 verbundenen, Führungskörpern 17. Wie bereits zu Fig. 2 ausgeführt, sind in den Führungselementen 29 schlitzartig ausgebildete Führungskurven 30 vorgesehen, in denen jeweils ein mit einem Führungskörper 17 verbundener Mitnehmer 27 geführt wird. Die Führungskörper 17 und die Führungselemente 29 sind parallel zueinander und zu der zwischen den Führungskörpern 17 angeordneten Lineareinheit 5a-5x angeordnet. Die Lineareinheiten 5a-5x sind radial ausgerichtet.

Jede Lineareinheit 5a-5x ist mit ihrem der Drehachse B zugewandten ersten Ende 24a über eine Achse 31 schwenkbar in einer zentralen Aufnahme 21 gelagert, so dass die Lineareinheit 5a-5x der vertikalen Bewegung der Sterntasche 8 folgt. Alternativ kann auch ein Drehgelenk angeordnet sein.

Jede Sterntasche 8 ist über eine Kopplungseinheit 22 mit der Sterntasche 8 verbunden. Die Kopplungseinheit 22 wird durch ein Stützelement 22a an der Sterntasche 8 gebildet, das mit dem zweiten Ende 24b der Lineareinheit 5a-5x verbunden ist. Die Verbindung erfolgt hier besonders einfach durch eine Verschraubung 24c des äußeren Endes eines der Kolben 7a-7x an dem jeweils dazugehörigen Stützelement 22a.

Im Sternrad 2 sind zudem Führungskörperaufnahmen 18 ausgebildet, in denen die Führungskörper 17 in einer vertikal und radial vollständig eingefahrenen Position anliegen. Zur Steuerung der Bewegung der Sterntaschen 8 können entsprechend der Ausführungen zu Fig. 1, die Lineareinheiten 8 bspw. in Reihe hintereinander verbunden sein.

Fig. 2 und Fig. 3 zeigen die Sterntaschen 8 in einer teilweise abgesenkten und ausgefahrenen Position (Betriebsposition), in der die Sterntaschen 8 in Vertikalrichtung E nach unten und in Radialrichtung A nach außen bewegt sind.

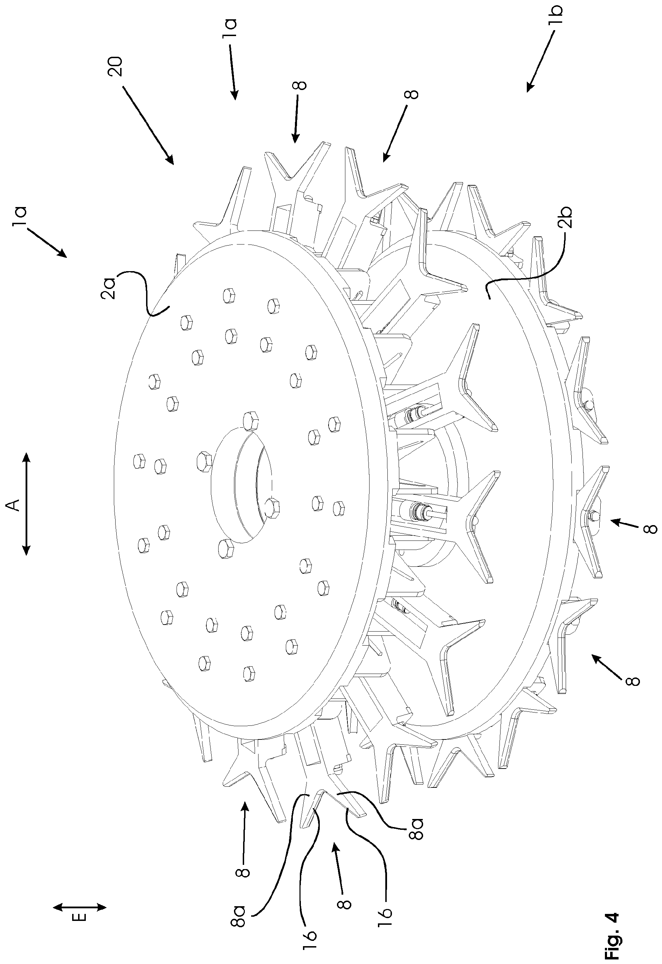

Fig. 4 zeigt schematisch in perspektivischer Darstellung einen Ausschnitt eines Transportsterns 1 mit zwei Transportsternebenen 1a, 1b, einer oberen Transportsternebene 1a und einer unteren Transportsternebene 1b. Jede Transportsternebene 1a, 1b weist ein Sternrad 2a, 2b mit über die Verstellvorrichtung 20 bewegbaren Sterntaschen 8 auf. Die Sterntaschen 8 an den Sternrädern 2a, 2b sind zum Anlegen von Behältern 9 ausgebildet, wobei jeweils eine Sterntasche 8 am oberen Sternrad 2a und eine Sterntasche 8 am unteren Sternrad 2b übereinander angeordnet sind und zum Anlegen eines einzelnen Behälters 9 an zwei unterschiedlichen Behälterabschnitten vorgesehen sind. Die Sterntaschen 8 sind v-förmig (gabelartig) ausgebildet und weisen an jedem Sterntaschenarm 8a einen Anlageabschnitt 16 auf.

Die Sternräder 2a, 2b sind identisch mit dem Sternrad 2 aus Fig. 2 und 3 ausgebildet. Jedes Sternrad 2a, 2b weist eine eigene Antriebseinheit 10 auf, so das die Sterntaschen 8 jedes Sternrades 2a, 2b unabhängig von den Sterntaschen 8 des anderen Sternrades 2a, 2b bewegbar sind. In Fig. 4 sind die Sterntaschen 8 des oberen (ersten) Sternrades 2a bereits in einer in Vertikalrichtung E und Radialrichtung A ausgefahrenen Betriebsposition dargestellt, während die Sterntaschen 8 des zweiten, unteren Sternrades 2b in einer in Radialrichtung A und Vertikalrichtung E vollständig eingefahrenen Position dargestellt sind.

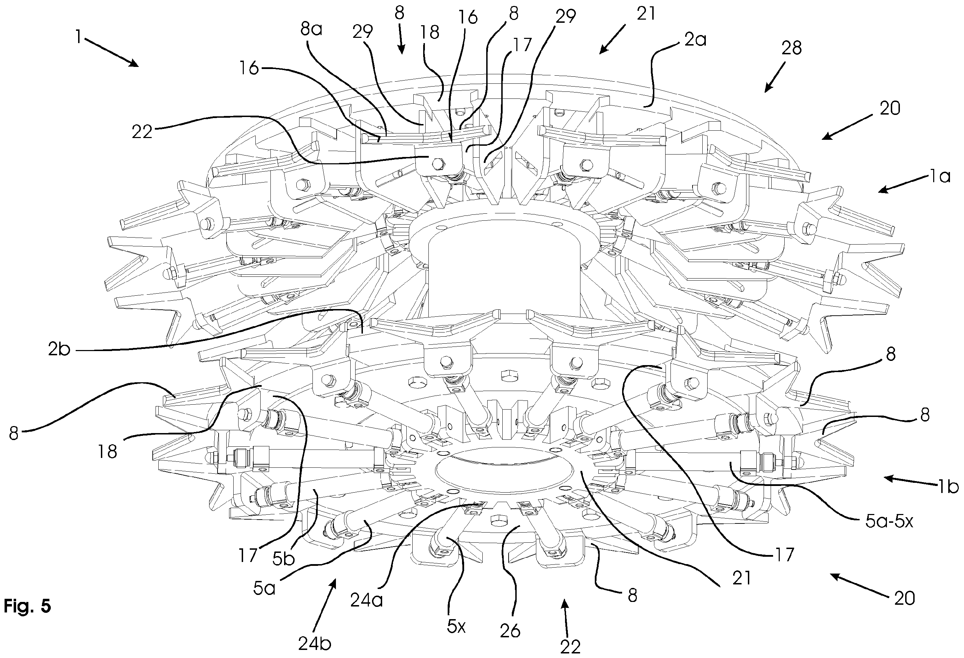

Fig. 5 zeigt schematisch in perspektivischer Darstellung einen Ausschnitt einer alternativen Ausführungsform eines Transportsterns 1 mit zwei Transportsternebenen 1a, 1b. Die obere Transportsternebene 1a ist identisch mit der oberen Transportsternebene 1a aus Fig. 4 ausgebildet. Die untere Transportsternebene 1b umfasst eine vereinfachte Verstellvorrichtung mit ausschließlich in Radialrichtung A bewegbar gelagerten Sterntaschen 8. Eine Bewegung der am unteren Sternrad 2b angeordneten Sterntaschen 8 in vertikale Richtung E ist nicht vorgesehen. Deshalb sind die ebenfalls in Radialrichtung A ausgerichteten Lineareinheiten 5a-5x am unteren Sternrad 2a mit ihrem ersten Ende 24a in der zentralen Aufnahme 21 nicht schwenkbar gelagert und es sind zudem keine Führungselemente 29 angeordnet. An jeder Sterntasche 8 ist dafür ein parallel zur Sternradebene 1b ausgerichteter, als Gleitkörper ausgebildeter Führungskörper 17 angeordnet, der gemeinsam mit einer im Sternrad 2a als Ausnehmung ausgebildeten Führungskörperaufnahme 18 eine Führungsvorrichtung 19 zum radialen Führen der Sterntaschen 8 bildet. Der Führungskörper 17 wird in der Führungskörperaufnahme 18 von einem Positionierkörper 26 gehalten. Die Führungskörperaufnahmen 18 sind in Radialrichtung A ausgerichtet.

Mit ihrem dem ersten Ende 24a gegenüberliegendem zweiten Ende 24b sind die Lineareinheiten 5a-5x ebenfalls über eine Kopplungseinheit 22 mit der Sterntasche 8 verbunden. Die Kopplungseinheit 22 ist entsprechend der Kopplungseinheiten 22 aus den Fig. 2-4 ausgebildet.

Die Ansteuerung der Lineareinheiten 5a-5x jedes Sternrades 2a, 2b kann entsprechend der Beschreibung zu Fig. 4 ebenfalls unabhängig voneinander erfolgen, bspw. mittels separater Antriebseinheiten 10.

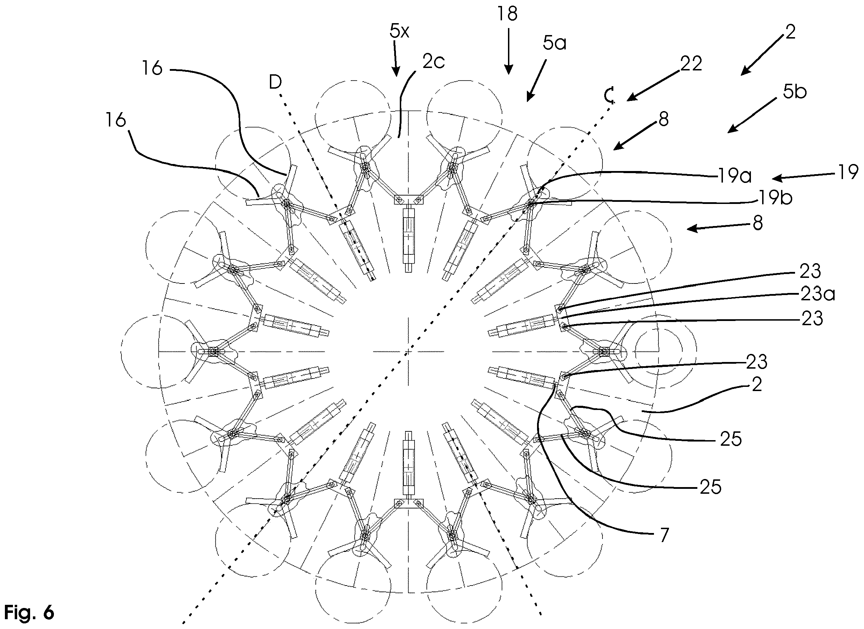

Fig. 6 zeigt schematisch in einer Ansicht eine Unterseite eines Sternrades 2 mit einer alternativen Ausführungsform einer Kopplungseinheit 22 mit Kopplungsarmen 25. Dabei sind die Mittelachsen D der Lineareinheiten 5a-5x radial jedoch versetzt zu den ebenfalls in Radialrichtung A angeordneten Mittelachsen C der Sterntaschen 8 angeordnet. Zwischen der Mittelachse D der Lineareinheiten 5a-5x und den Mittelachsen C der Sterntaschen 8 ist ein Winkel α ≠ 0°.

Die Sterntaschen 8 weisen jeweils Anlagebereiche 16 und eine als Kulissenführung ausgebildete Führungsvorrichtung 19 auf. Um eine ausschließlich radiale Bewegung der Sterntaschen entsprechend des in Fig. 5 beschriebenen unteren Sternrades 2b zu ermöglichen, kann die Führungsvorrichtung 19 in einem Grundkörper 2c des Sternrades 2 eine als schlitzartige Führungskörperaufnahme 18 ausgebildete Kulissenbolzenaufnahme 19a aufweisen, in der ein als Führungskörper 17 ausgebildeter Kulissenbolzen 19b in Radialrichtung A bewegbar gelagert ist. Jeder Kulissenbolzen 19b ist wiederum mit zwei drehbar am Kulissenbolzen 19b angeordneten Kopplungsarmen 25 verbunden. Die Kopplungsarme 25 sind mit ihrem den Kulissenbolzen 19b gegenüberliegenden Ende über eine Drehlagerung 23 an einer Kopplungsarmaufnahme 23a jeweils mit dem zweiten Ende 24b eines Kolbens 7a-7x einer der Lineareinheiten 5a-5x gekoppelt.

Für jede Sterntasche 8 ist jeweils eine Lineareinheit 5a-5x angeordnet. Das Verhältnis der Anzahl an Sterntaschen 8 und der Anzahl an Lineareinheiten 5a-5x beträgt somit 1:1.

Über die aus den Kopplungsarmen 25, den jeweiligen Drehkopplungen 23 und der drehbaren Verbindung mit dem Kulissenbolzen 19a ausgebildete Kopplungseinheit 22, sind - zumindest indirekt - sämtliche Lineareinheiten 5a-5x mit sämtlichen Sterntaschen 8 gekoppelt. Diese Ausführungsform ermöglicht eine besonders stabile Positionierung der Sterntaschen 8 in einer vorgegebenen Position. Der im Betrieb entstehende Gegendruck auf eine oder mehrere Sterntaschen 8, wird über die Kopplungseinheit 22 auf sämtliche Lineareinheiten 5a-5x übertragen, wodurch die Positionsstabilität der Sterntaschen 8 deutlich verbessert wird.

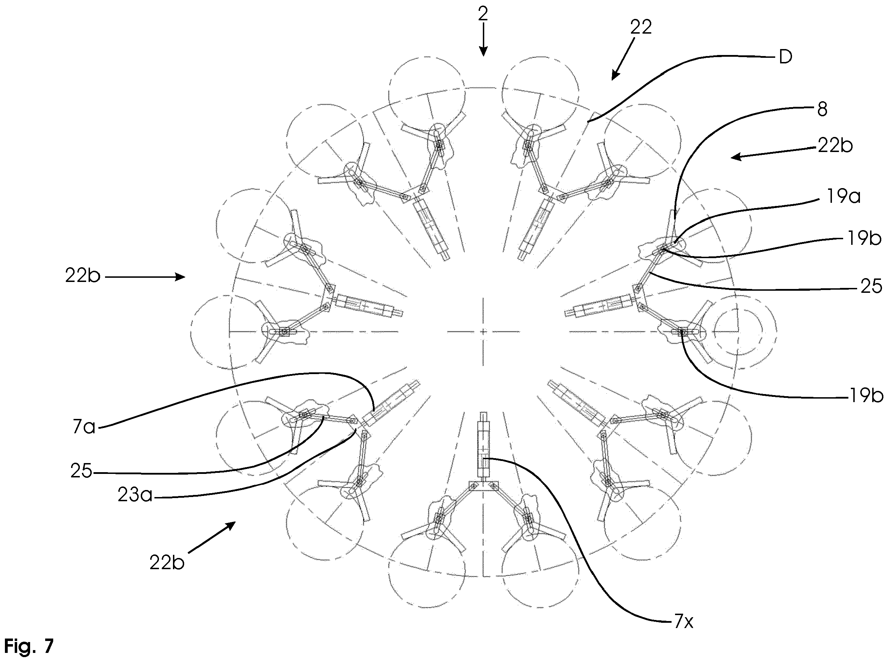

Fig. 7 zeigt schematisch in einer Ansicht eine weitere Ausführungsform des Sternrads 2 mit einer Kopplungseinheit 22. Die Kopplungseinheit 22 besteht aus mehreren Teilkopplungen 22b, die jeweils zwei Sterntaschen 8 mit einer der Lineareinheit 7a-7x verbindet. Die Kopplungseinheit 22 entspricht dabei weitestgehend der Ausführungsform aus Fig. 6, jedoch ist an jedem Kulissenbolzen 19b jeweils nur ein Kopplungsarm 25 drehbar angeordnet, so dass jeweils zwei Sterntaschen 8 von einer der Lineareinheiten 5a-5x angetrieben werden. Diese Ausführungsform ist besonders günstig, da das Verhältnis der Anzahl an Sterntaschen 8 zu der Anzahl an Lineareinheiten 5a-5x 2:1 beträgt, wodurch eine besonders geringe, einfach steuerbare Anzahl an Lineareinheiten 5a-5x zum radialen Bewegen der Sterntaschen 8 angeordnet ist.

Eine weitere alternative Ausführungsform kann über eine Kombination der in Fig. 6 und Fig. 7 dargestellten Ausführungsformen erreicht werden. Hierfür können in jedem Kulissenbolzen 19b zwei Kopplungsarme 25 angreifen, wobei jeweils einer der Kopplungsarme 25 mit einem Kopplungsarm 25 des an der benachbarten Sterntasche angeordneten Kulissenbolzens 19b verbunden ist. Diese Verbindung kann ggf. zur Verbesserung der Führung auch eine zusätzliche Führungsvorrichtung 19 mit Kulissenbolzen 19b und Kulissenbolzenaufnahme 19a im Bereich der freien Enden der Kopplungsarme 25 aufweisen. Diese nicht dargestellte Ausführungsform weist entsprechend der Ausführungsform aus Fig. 7 das Verhältnis von 2:1 zwischen der Anzahl der Sterntaschen 8 und der Anzahl der Lineareinheiten und entsprechend der Ausführungsform aus Fig. 6 eine Kopplungseinheit 22 auf, die alle Sterntaschen 8 mit allen Lineareinheiten 5a-5x verbindet.

Um bei den Ausführungsformen gemäß Fig. 6 und Fig.7 sowohl eine radiale als auch eine vertikale Bewegung der Sterntaschen 8 zu ermöglichen, weist die Führungsvorrichtung 19 anstatt einer Kulissenbolzenaufnahme 19a ein bspw. senkrecht zum Sternrad 2 angeordnetes Führungselement 29 (hier nicht dargestellt) mit einer Führungskurve 30 auf, wobei der Kulissenbolzen 19b als Mitnehmer 27 (hier nicht dargestellt) ausgebildet sein kann. Am Mitnehmer 27 kann der Kopplungsarm 25 oder können die Kopplungsarme 25 angreifen.

Die Sterntaschen 8 sämtlicher Ausführungsformen aus Fig. 1-7 weisen zwei starr zueinander angeordnete Sterntaschenarme 8a auf und sind somit v-förmig (gabelartige) ausgebildet. Dabei weist jeder Sterntaschenarm 8a einen außenseitig angeordneten Anlageabschnitt 16 für einen der Behälter 9 auf.

Die Lineareinheiten 5a-5x sämtlicher Ausführungsformen aus Fig. 1-7 sind als Kolben-Zylinder-Einheiten dargestellt. Diese werden hier über ein flüssiges Fluid (Hydraulikflüssigkeit) angetrieben. Selbstverständlich sind auch alternative Antriebsvorrichtung, wie bspw. pneumatisch und/oder elektrisch angetriebene Kolben-Zylinder-Einheiten, einsetzbar. Alternativ können die in den Fig. 1-7 dargestellten Lineareinheiten auch als elektrisch angetriebene Lineareinheit, bspw. als Spindelantriebe, Zahnradantriebe, Servomotoren und/ oder als elektrische Linearmotoren ausgebildet sein.

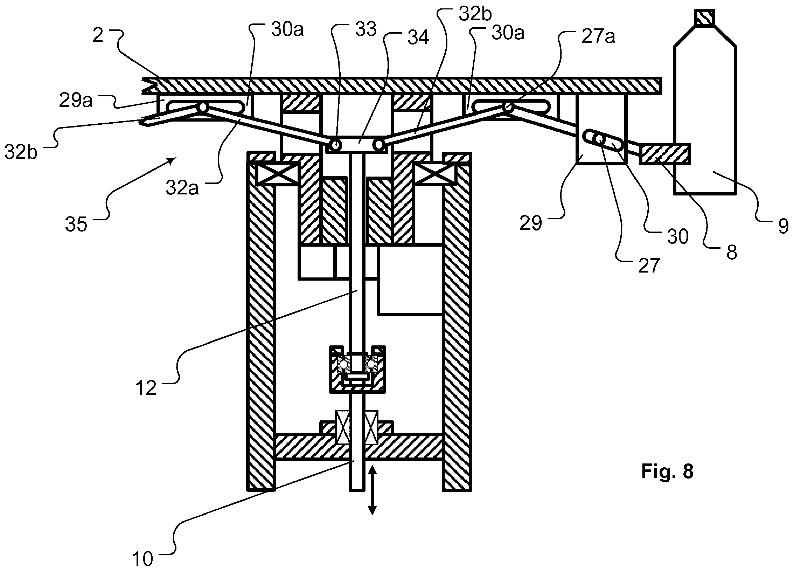

Figur 8 zeigt eine alternative Ausführungsform, bei der der Grundaufbau dem der Figur 1 entspricht. Hierbei treiben die vertikal verfahrbare Antriebseinheit 10 und die gekoppelte Verteilereinheit 12, welche an ihrem oberen Ende ein Kopfelement 34 aufweist, zentral eine Vielzahl von Hebelarme 35 an. Die Hebelarme 35 sind mit einem ersten Gelenk 33 an dem Kopfelement 34 gelagert und weisen einen ersten Führungsstab 32a auf, der über einen Mitnehmer 27a gelenkig mit einem zweiten Führungsstab 32b verbunden ist. Der Mitnehmer 27a ist dabei in einer Führungskurve 30a geführten, die in einem an dem Sternrad 2 befestigten Führungselement 29a angeordnet ist. In der gezeigten Ausführungsform der Figur 8 sind die beiden Führungskurven 30 und 30a als Langlöcher ausgeführt, die keine oder nur eine einzige Steigung aufweisen. Die Führungskurven könnten aber auch beide oder nur eine davon, in geeigneter Weise einen bogen- oder kurvenförmigen Verlauf aufweisen, insb. einen Kurvenverlauf, dessen radial inneres Ende oberhalb von dem radial äußeren Kurvenende liegt.

Die Führungsstäbe 32b tragen an den radial äußeren, freien Ende je eine Sterntasche 8 oder sind als eine solche ausgebildet. Dabei ist der zweite Führungsstab 32b analog geführt beziehungsweise gelagert, wie es für den Führungskörper 17 zur Figur 5 beschrieben ist.

Weiterhin können analog zur Aufführung der Figur 6 Kopplungsarme 25 vorgesehen werden, um mit einem Hebelarm 35 zwei Sterntaschen 8 radial und in der Höhe zu verfahren.

Auch kann die Verstellvorrichtung 20 eine mit den Lineareinheiten 5a-5x und der Antriebsvorrichtung 10 verbundene Zentralverstellung (nicht dargestellt) aufweisen, die entsprechend der obigen Ausführungen als mechanische Zentralverstellung, bspw. als Gestänge oder mechanisch bewegbare Kolben-Zylinder-Einheit ausgebildet ist. Hierzu angepasst können die in Figur 1-7 dargestellten Lineareinheiten 5a-5x ebenfalls als mechanisch verstellbare Gestänge, Führungsvorrichtungen, Kulissenführungen und/oder mechanisch verstellbare Kolben-Zylinder-Einheiten, die mit der Zentralverstellung gekoppelt sind, ausgebildet sein.

### Bezugszeichenliste

- 1: Transportstern
- 1a, 1b: Transportsternebenen
- 2: Sternrad
- 2a: oberes Sternrad
- 2b: unteres Sternrad
- 2c: Grundkörper Sternrad
- 3: Drehlagerung Sternrad
- 4: Sternradaufnahme
- 5a-5x: Lineareinheiten
- 6a-6x: Zylinder
- 7a-7x: Kolben
- 8: Sterntasche
- 8a: Sterntaschenarme
- 9: Behälter
- 10: Antriebseinheit
- 11: Mechanische Kopplung
- 12: Verteilereinheit
- 13: Hydraulikflüssigkeitsleitung
- 14: Verbindungsleitung für Hydraulikflüssigkeit
- 15: Rückleitung für Hydraulikflüssigkeit
- 16: Anlagebereiche
- 17: Führungskörper
- 17a: äußeres Ende Führungskörper
- 18: Führungskörperaufnahme
- 19: Führungsvorrichtung
- 19a: Kulissenbolzenaufnahme
- 19b: Kulissenbolzen
- 20: Verstellvorrichtung
- 21: Zentrale Aufnahme
- 22: Kopplungseinheit
- 22a: Stützelement
- 22b: Teilkopplungseinheit
- 23: Drehlagerung
- 23a: Kopplungsarmaufnahme
- 24a: erstes Ende Lineareinheit
- 24b: zweites Ende Lineareinheit
- 24c: Verschraubung
- 25: Kopplungsarm
- 26: Positionierkörper
- 27, 27a: Mitnehmer
- 28: Führungseinheit
- 29, 29a: Führungselement
- 30, 30a: Führungskurve
- 31: Achse
- 32a, 32b: Führungsstab
- 33: Gelenk
- 34: Kopfelement
- 35: Hebelarm

- A: Radialrichtung
- B: Drehachse Sternrad
- C: Mittelachse Sterntasche
- D: Mittelachse Lineareinheit
- E: Vertikalrichtung

## Patentansprüche

1. Transportstern zum Führen von Behältern in einer Behälterbehandlungsanlage mindestens umfassend:
- ein Sternrad (2) mit einer Mehrzahl an Sterntaschen (8) zur Anlage von jeweils einem der Behälter (9) und
- eine Verstellvorrichtung (20) mit einer Mehrzahl von in Radialrichtung angeordneten Lineareinheiten (5a-5x) zum Bewegen der Sterntaschen (8), eine die Lineareinheiten (5a-5x) und die Sterntaschen (8) verbindenden Kopplungseinheit (22) und eine Führungseinheit (28) zum Führen der Sterntaschen (8) in radialer und vertikaler Richtung,
wobei der Transportstern keine Greif- oder Klammerelemente zum Ergreifen oder Umfassen eines Behälters aufweist, wobei die Führungseinheit (28) einen in einer Führungskurve (30) angeordneten und mit einer der Sterntaschen (8) gekoppelten Mitnehmer (27) aufweist.

2. Transportstern nach Anspruch 1, **dadurch gekennzeichnet, dass** die Lineareinheiten (5a-5x) als hydraulische Lineareinheiten (5a-5x) ausgebildet sind.

3. Transportstern nach einem der vorhergehenden Ansprüche, **dadurch gekennzeichnet, dass** die Lineareinheiten (5a-5x) mit einem ersten Ende (24a) schwenkbar gelagert sind.

4. Transportstern nach einem der vorherigen Ansprüche, **dadurch gekennzeichnet, dass** die Führungskurve (30) schwenkbar gelagert ist.

5. Transportstern nach einem der vorhergehenden Ansprüche, **dadurch gekennzeichnet, dass** die Verstellvorrichtung (20) dazu ausgebildet ist, jede Sterntasche (8) eines Sternrades (2) gleichzeitig, nacheinander und/oder abwechselnd in radialer Richtung und vertikaler Richtung zu bewegen.

6. Transportstern nach einem der vorhergehenden Ansprüche, **dadurch gekennzeichnet, dass** die Sterntaschen (8) zwei im Betrieb des Transportsterns (1) starr zueinander angeordnete Sterntaschenarme (8a) zum Kontakt mit einem der Behälter (9) aufweisen, wobei die Sterntaschenarme (8a) im Betrieb des Transportsterns (1) keine Klammer- oder Greifbewegung zum Erfassen eines der Behälter (9) durchführen.

7. Transportstern nach einem der vorhergehenden Ansprüche, **dadurch gekennzeichnet, dass** die Verstellvorrichtung (20) eine mit der Lineareinheit (5a-5x) gekoppelte, zum Antrieb der Lineareinheit (5a-5x) ausgebildete, Antriebseinheit (10) aufweist.

8. Transportstern nach einem der vorhergehenden Ansprüche, **dadurch gekennzeichnet, dass** die Lineareinheiten (5a-5x) oder Gruppen von Lineareinheiten (5a-5x) in Reihe nacheinander gekoppelt sind.

9. Transportstern nach einem der vorhergehenden Ansprüche, **dadurch gekennzeichnet, dass** die Verstellvorrichtung (20) eine mit der Antriebseinheit (10) und den Lineareinheiten (5a-5x) gekoppelte Verteilereinheit (12) aufweist.

10. Transportstern nach Anspruch 9, **dadurch gekennzeichnet, dass** die Verteilereinheit (12) eine hydromechanische Gleichlaufeinrichtung ist, mittels der eine gesteuerte Verteilung eines hydraulischen Fluids bewirkt und ein Gleichlauf der hydraulischen Lineareinheiten (5a-5x) erzeugt wird.

11. Transportstern nach einem der vorhergehenden Ansprüche, **dadurch gekennzeichnet, dass** die Antriebseinheit (10) an einem im rotierenden Betrieb des Sternrades (2) nicht rotierenden Baukörper der Behälterbehandlungsanlage ist.

12. Transportstern nach mindestens einem der Ansprüche 9 bis 11, **dadurch gekennzeichnet, dass** zwischen der Antriebseinheit (10) und der Verteilereinheit (12) eine Kopplung, insbesondere eine mechanische Kopplung (11), zur Übertragung der Antriebskraft von der Antriebseinheit (10) auf die Verteilereinheit (12) angeordnet ist.

13. Transportstern nach einem der vorhergehenden Ansprüche, **dadurch gekennzeichnet, dass** ein Sensor zur Ermittlung der Position der Sterntaschen (8) angeordnet ist.

14. Transportstern nach einem der vorhergehenden Ansprüche, **dadurch gekennzeichnet, dass** der Transportstern (1) ein oberes und ein unteres Sternrad (2a, 2b) aufweist, wobei mindestens eines der beiden Sternräder (2a, 2b) vertikal und radial verstellbare Sterntaschen (8) aufweist.

## Claims

1. Transport star-wheel for guiding containers in a container handling facility, comprising:
- A star-wheel (2) with a plurality of star pockets (8) each for receiving one of the containers (9), and
- an adjustment device (20) with a plurality of linear units (5a-5x), arranged in the radial direction, for moving the star-wheel pockets (8), a coupling unit (22) connecting the linear units (5a-5x) and the star-wheel pockets (8), and a guide unit (28) for guiding the star-wheel pockets (8) in the radial and vertical direction,
wherein the transport star-wheel does not have any gripping or clamping elements for gripping or taking hold of a container,
wherein
the guide unit (28) comprises a driver dog element (27), arranged in a guide curve (30) and coupled to one of the star-wheel pockets (8).

2. Transport star-wheel according to claim 1, **characterised in that** the linear units (5a-5x) are configured as hydraulic linear units (5a-5x).

3. Transport star-wheel according to any one of the preceding claims, **characterised in that** the linear units (5a-5x) are pivotably mounted with a first end (24a).

4. Transport star-wheel according to any one of the preceding claims, **characterised in that** the guide curve (30) is pivotably mounted.

5. Transport star-wheel according to any one of the preceding claims, **characterised in that** the adjustment device (20) is configured such as to move each star-wheel pocket (8) of a star-wheel (2) simultaneously, one after another, and/or alternately in the radial direction and vertical direction.

6. Transport star-wheel according to any one of the preceding claims, **characterised in that** the star-wheel pockets (8) comprise two star-wheel pocket arms (8a), arranged rigidly in relation to one another in the operation of the transport star-wheel (1), for the contact with one of the containers (9), wherein, in the operation of the transport star-wheel (1), the star-wheel pocket arms (8a) do not carry out any clamping or gripping movement in order to take hold of one of the containers (9).

7. Transport star-wheel according to any one of the preceding claims, **characterised in that** the adjustment device (20) comprises a drive unit (10), coupled to the linear unit (5a-5x) and designed to drive the linear unit (5a-5x).

8. Transport star-wheel according to any one of the preceding claims, **characterised in that** the linear units (5a-5x) or groups of linear units (5a-5x) are coupled in series one after another.

9. Transport star-wheel according to any one of the preceding claims, **characterised in that** the adjustment device (20) comprises a distribution unit (12) coupled to the drive unit (10) and the linear units (5a-5x).

10. Transport star-wheel according to claim 9, **characterised in that** the distribution unit (12) is a hydromechanical synchronising device, by means of which a controlled distribution of a hydraulic fluid is carried out, and a synchronous movement of the hydraulic linear units (5a-5x) is achieved.

11. Transport star-wheel according to any one of the preceding claims, **characterised in that**, in the rotating operation of the star-wheel drive (2), the drive unit (10) is arranged at a non-rotating structural body of the container handling system.

12. Transport star-wheel according to any one of claims 9 to 11, **characterised in that** a coupling, in particular a mechanical coupling (11), is arranged between the drive unit (10) and the distribution unit (12) for transferring the drive power of the drive unit (10) onto the distribution unit (12).

13. Transport star-wheel according to any one of the preceding claims, **characterised in that** a sensor is arranged such as to detect the position of the star-wheel pockets (8).

14. Transport star-wheel according to any one of the preceding claims, **characterised in that** the transport star-wheel (1) comprises an upper and a lower star-wheel (2a, 2b), wherein at least one of the two star-wheels (2a, 2b) comprise star-wheel pockets (8) which are adjustable vertically and radially.

## Revendications

1. Système de transport en étoile pour guider des contenants dans une installation de traitement de contenants, comprenant au moins :
- une roue de système en étoile (2) avec une multitude de réceptacles en étoile (8) pour l'appui de respectivement un des contenants (9) et
- un dispositif d'ajustement (20) avec une multitude d'unités linéaires (5a
- 5x) disposées dans une direction radiale, destinées à déplacer les réceptacles en étoile (8), une unité de couplage (22) reliant les unités linéaires (5a - 5x) et les réceptacles en étoile (8) et une unité de guidage (28) pour guider les réceptacles en étoile (8) dans une direction radiale et verticale,
dans lequel le système de transport en étoile ne présente aucun élément de préhension ou élément à pince pour saisir ou entourer un contenant,
dans lequel
l'unité de guidage (28) présente un entraîneur (27) disposé dans une came de guidage (30) et couplé à un des réceptacles en étoile (8).

2. Système de transport en étoile selon la revendication 1, **caractérisé en ce que** les unités linéaires (5a - 5x) sont réalisées en tant qu'unités linéaires (5a - 5x) hydrauliques.

3. Système de transport en étoile selon l'une quelconque des revendications précédentes, **caractérisé en ce que** les unités linéaires (5a - 5x) sont montées de manière à pouvoir pivoter par une première extrémité (24a).

4. Système de transport en étoile selon l'une quelconque des revendications précédentes, **caractérisé en ce que** la came de guidage (30) est montée de manière à pouvoir pivoter.

5. Système de transport en étoile selon l'une quelconque des revendications précédentes, **caractérisé en ce que** le dispositif d'ajustement (20) est réalisé pour déplacer chaque réceptacle en étoile (8) d'une roue de système en étoile (2) simultanément, l'un après l'autre et/ou en alternance dans la direction radiale et dans la direction verticale.

6. Système de transport en étoile selon l'une quelconque des revendications précédentes, **caractérisé en ce que** les réceptacles en étoile (8) présentent deux bras de réceptacle en étoile (8a) disposés de manière rigide l'un par rapport à l'autre lors du fonctionnement du système de transport en étoile (1), destinés à établir un contact avec un des contenants (9), dans laquelle les bras de réceptacles en étoile (8a) ne réalisent aucun déplacement de pince ou de préhension pour saisir un des contenants (9) lors du fonctionnement du système de transport en étoile (1).

7. Système de transport en étoile selon l'une quelconque des revendications précédentes, **caractérisé en ce que** le dispositif d'ajustement (20) présente une unité d'entraînement (10) couplée à l'unité linéaire (5a - 5x), réalisée pour l'entraînement de l'unité linéaire (5a - 5x).

8. Système de transport en étoile selon l'une quelconque des revendications précédentes, **caractérisé en ce que** les unités linéaires (5a - 5x) ou des groupes d'unités linéaires (5a - 5x) sont couplées de manière alignée les unes après les autres.

9. Système de transport en étoile selon l'une quelconque des revendications précédentes, **caractérisé en ce que** le dispositif d'ajustement (20) présente une unité de distribution (12) couplée à l'unité d'entraînement (10) et aux unités linéaires (5a - 5x).

10. Système de transport en étoile selon la revendication 9, **caractérisé en ce que** l'unité de distribution (12) est un dispositif de synchronisation hydromécanique, au moyen duquel une distribution commandée d'un fluide hydraulique est entraînée et une synchronisation des unités linéaires (5a - 5x) hydrauliques est générée.

11. Système de transport en étoile selon l'une quelconque des revendications précédentes, **caractérisé en ce que** l'unité d'entraînement (10) est disposée sur un corps de construction de l'installation de traitement de contenants ne tournant pas lors du fonctionnement en rotation de la roue de système en étoile (2).

12. Système de transport en étoile selon au moins l'une quelconque des revendications 9 à 11, **caractérisé en ce qu'**un couplage, en particulier un couplage mécanique (11), pour transmettre la force d'entraînement de l'unité d'entraînement (10) sur l'unité de distribution (12) est disposé entre l'unité d'entraînement (10) et l'unité de distribution (12).

13. Système de transport en étoile selon l'une quelconque des revendications précédentes, **caractérisé en ce qu'**un capteur est disposé pour déterminer la position des réceptacles en étoile (8).

14. Système de transport en étoile selon l'une quelconque des revendications précédentes, **caractérisé en ce que** le système de transport en étoile (1) présente une roue de système en étoile supérieure et une roue de système en étoile inférieure (2a, 2b), dans lequel au moins une des deux roues de système en étoile (2a, 2b) présente des réceptacles en étoile (8) pouvant être ajustés verticalement et radialement.
